# EUROPEAN PATENT APPLICATION

(11) **EP 4 316 259 A1**
(43) Date of publication of application: **07.02.2024**
(21) Application number: 22780118.0
(22) Date of filing: 16.03.2022
(51) Int. Cl.: A23J 3/14, A23L 13/00

(54) **TEXTURED PLANT-BASED PROTEIN MATERIAL AND PRODUCTION METHOD FOR SAME**

(30) Priority: 30.03.2021 JP 2021057016
(71) Applicant: Fuji Oil Holdings Inc., Izumisano-shi, Osaka 598-8540 (JP)
(72) Inventor: HASHIMOTO, Shuzo, Izumisano-shi, Osaka 598-8540 (JP); SHIROTANI, Naoki, Izumisano-shi, Osaka 598-8540 (JP)
(74) Representative: Becker, Eberhard
(86) International application number: PCT/JP2022/011893
(87) International publication number: WO 2022/209898

(57) **Abstract**

The present invention addresses the problem of providing a textured plant-based protein material which has a meat-like umami and a juicy feel, while not imparting a grain odor unique to plant-based protein materials. We discovered that it is possible to produce a textured plant-based protein material that masks a grain odor unique to plant-based protein materials and has a meat-like umami, while imparting a juicy feel, as a result of using microbial fermented product having a yeast odor due to fermentation and containing 6-lactones and/or γ-lactones.

## Description

### Technical Field

The present invention relates to a textured plant protein material and a method for producing the same.

### Background Art

Textured protein materials produced by puffing a structure of a kneaded raw material product composed mainly of a protein raw material derived from a plant such as soybean or wheat with an extruder are achieved with a quality similar to an animal meat-like elastic texture, and are widely used as raw materials for the production of processed foods using animal meat, such as hamburger steak, meatball, gyoza (chiaotzu), steamed meat bun, shu mai (steamed meat dumpling), minced meat cutlet, croquette, and minced meat. Also, textured protein materials themselves are directly cooked and used as meat substitutes such as deep-fried chicken and roast pork in many cases. In recent years, soybean puffs having a light texture are increasingly used for cereal bars and granola.

In recent years, a patent application has been filed, in which a protein raw material is combined with an auxiliary raw material to create a textured protein material having a characteristic texture. For example, there is a technique capable of producing a textured soybean protein material having a meat-like texture with more appropriate hardness and meat-like loose texture by adding oat fibers as an auxiliary raw material (Patent Document 1).

The textured plant protein material is usually produced by introducing a powdery raw material such as a protein raw material and a water-containing raw material into an extruder, kneading, pressurizing and heating the raw materials, extruding the raw materials through a die installed at an outlet of the extruder under normal pressure for texturing, and drying the textured material.

Many of the textured plant protein materials have a particulate shape, and the particulate shape is roughly classified into two types, including a granular shape in which the product extruded through the die is used as it is and a fine shape in which the product extruded through the die is processed using a pulverizer. The former is utilized for providing chewiness of the final product, and the latter is utilized mainly for providing softness and a juicy palate.

In addition, many new types of textured protein foods having a structure and a texture similar to those of meats and scallop eyes are developed by kneading raw materials in an extruder and then processing the structure into a film or fiber shape using a jacket-cooling type die called a cooling die, and have been put on the market. This production technique has an advantage in that dense and long fibers can be produced as compared with those of the above-described puffed textured product.

While the current trend of replacing animal foods with plant-based raw materials is becoming stronger, there is an increasing demand from customers for textured plant protein materials that have a more animal meat-like elastic texture and that have superior flavor qualities.

### Citation List

### Patent Literature

Patent Document 1: JP 5794373 B
Patent Document 2: WO 2015-153666 A
Patent Document 3: JP 3479342 B

### Non-Patent Document

Non-Patent Document 1: Watanabe et al., 57th International Congress of Meat Science and Technology 2011

### Summary of Invention

### Technical Problem

It is particularly difficult to reproduce umami, a juicy palate and the like which are perceived as an aftertaste when meat is chewed. In recent years, there are perfumes with beef tallow or lard flavors, but, because of insufficient masking of a grain smell which is necessarily present in plant-based meat substitute materials, the grain smell and a sweet aroma coexist, and the meat-like umami, juicy palate, and the like cannot be reproduced.

In addition, there is a demand for a technology capable of reproducing the umami, juicy palate, and the like perceived as an aftertaste when meat is chewed, with only a food material, since an additive-free trend has appeared.

It is known that lactones are present as causative substances of the umami, juicy palate and the like which are perceived as an aftertaste when meat, such as beef tallow or lard, is chewed. Among the lactones, δ-lactone is found to be a causative substance of the umami, juicy palate, and the like, which are mainly perceived as an aftertaste when meat is chewed (Non-Patent Document 1). Lactones are often contained in animal materials such as beef tallow, lard and cow milk, and it is necessary to carry out a special process in order to obtain lactones free of animal raw materials and additives.

In Patent Document 2, a lactone is added to reproduce the umami, sweetness, juicy palate, and animal smell which are perceived as an aftertaste when meat is chewed. However, basically isolated substances are used and additives are also used, for example, "5-ethyl-4-hydroxy-2-methyl-3(2H)-furanone was added to a final concentration of 2.5*10⁻⁵%, butyrolactone was added to a final concentration of 2.5*10⁻⁸%, and δ-tetradecalactone was added to a final concentration of 5*10⁻⁹%". However, lactones mainly contribute to the aftertaste, and thus, even if an isolated substance such as a perfume is used in a textured plant protein material, a grain smell peculiar to plant protein materials remains. Therefore, the umami, juicy palate, and the like, which are perceived as an aftertaste when meat is chewed are hardly perceived.

Methods for producing a food raw material rich in γ-lactone are reported. Patent Document 3 discloses a method for producing a liquid composition in which lactic acid bacteria belonging to the genus Lactobacillus and microorganisms belonging to the genus Saccharomyces are caused to act on fatty acids (free acids) liberated by hydrolysis or lipase treatment of a lipid-containing organic substance to obtain a solution containing γ-dodecalactone and γ-decalactone. The product obtained by this production method can be used as a food material which is not an additive, because the raw materials therefor are also food materials. For the lactones obtained by these production methods, off-flavor is removed from γ-lactone by distillation or extraction with ethanol or the like. However, since γ-lactone has a fruit or peach aroma, the reproduction of the umami/juicy palate perceived as an aftertaste when meat is chewed has not been sufficiently verified. There is also a problem that the grain smell peculiar to plant protein materials remains for the same reason as described in paragraph [0010].

As described above, although the methods for producing a food raw material rich in γ-lactones have been reported, it is difficult to produce a meat-like aroma, which is perceived when 6-lactones are used, by using γ-lactones. Further, when an isolated substance such as a perfume is used, a grain flavor peculiar to plant protein materials remains. Therefore, it becomes difficult to perceive the umami and juicy palate, which are perceived as an aftertaste when the meat is chewed.

In view of these problems, there is a demand for a textured plant protein material which uses a lactone, has natural meat-like umami and a juicy palate, and does not provide a grain smell peculiar to plant protein materials.

Accordingly, an object of the present invention is to provide a textured plant protein material which has meat-like umami and a juicy palate and does not provide a grain smell peculiar to plant protein materials.

### Solution to Problem

As a result of earnest studies on the object, the present inventors have found that a textured plant protein material can be produced, which is capable of providing a juicy palate while having meat-like umami, by using a microbial fermentation product having a yeast smell created by fermentation and containing δ-lactones and/or γ-lactones to mask a grain smell peculiar to plant proteins, and have completed the present invention.

That is, the present invention relates to:
(1) A textured plant protein material including from 15 to 95 wt.% of a protein, wherein the textured plant protein material further includes a microbial fermentation product containing δ-lactones and/or γ-lactones, and has a content of the δ-lactones and/or the γ-lactones of 1 ppb or more on a weight basis;
(2) The textured plant protein material according to (1), wherein the content of the δ-lactones and/or the γ-lactones is 5 ppb or more on a weight basis;
(3) The textured plant protein material according to (1), wherein the content of the δ-lactones and/or the γ-lactones is 10 ppb or more on a weight basis;
(4) The textured plant protein material according to (1), which is a microbial fermentation product by lactic acid bacteria and/or yeast;
(5) The textured plant protein material according to (2), which is a microbial fermentation product by lactic acid bacteria and/or yeast;
(6) The textured plant protein material according to (3), which is a microbial fermentation product by lactic acid bacteria and/or yeast;
(7) A meat substitute material containing the textured plant protein material described in (1);
(8) A meat substitute material containing the textured plant protein material described in (3);
(9) A meat substitute material containing the textured plant protein material described in (4);
(10) A meat substitute material containing the textured plant protein material described in (6);
(11) A method for producing a textured plant protein material having a content of δ-lactones and/or γ-lactones of 1 ppb or more on a weight basis and including from 15 to 95 wt.% of a protein, the method including: introducing a protein raw material and a raw material including a microbial fermentation product containing the 6-lactones and/or the γ-lactones into an extruder; kneading, pressurizing and heating the raw materials; and extruding the raw materials through a die installed at an outlet of the extruder under normal pressure for texturing;
(12) The method for producing a textured plant protein material according to (11), wherein the content of the δ-lactones and/or the γ-lactones is 5 ppb or more on a weight basis;
(13) The method for producing a textured plant protein material according to (11), wherein the content of the 6-lactones and/or the γ-lactones is 10 ppb or more on a weight basis;
(14) The method for producing a textured plant protein material according to (11), wherein the textured plant protein material is a microbial fermentation product by lactic acid bacteria and/or yeast; and
(15) The method for producing a textured plant protein material according to (13), wherein the textured plant protein material is a microbial fermentation product by lactic acid bacteria and/or yeast.

### Advantageous Effects of Invention

According to the present invention, it is possible to produce a textured plant protein material capable of providing a juicy palate while having meat-like umami by masking a grain smell peculiar to plant proteins.

### Description of Embodiments

Embodiments of the present invention will be described in detail below.

### Textured Plant Protein Material

The textured plant protein material of the present invention is characterized by being a textured plant protein material including from 15 to 95 wt.% of a protein, wherein the textured plant protein material further includes a microbial fermentation product containing δ-lactones and/or γ-lactones, and has a content of the δ-lactones and/or the γ-lactones of 1 ppb or more on a weight basis.

The content of the 6-lactones and/or the γ-lactones in the textured plant protein material is preferably 5 ppb or more, more preferably 10 ppb or more, even more preferably 40 ppb or more, and still even more preferably 80 ppb or more. Further preferably, from 10 to 3000 ppb, from 40 to 3000 ppb, from 80 to 3000 ppb, from 10 to 2500 ppb, from 40 to 2500 ppb, or from 80 to 2500 ppb can also be selected. When the content of the 6-lactones and/or the γ-lactones in the textured plant protein material is less than 1 ppb, the meat-like umami and juicy palate cannot be perceived.

As the lactones in the textured plant protein material, the δ-lactones and the γ-lactones are preferably contained.

The content of the protein in the textured plant protein material is preferably from 20 to 93 wt.%, and more preferably, can be from 20 to 91 wt.% or from 22 to 90 wt.%.

### Protein

An origin of the protein used in the present invention is not limited, and examples thereof include proteins derived from oilseeds such as soybean, pea, mung bean, chickpea, broad bean, rapeseed, cottonseed, peanut, sesame, safflower, sunflower, corn, safflower, and coconut; and proteins derived from grain seeds such as rice, barley, and wheat. Among the above raw materials, protein materials derived from soybean as described in the Examples and protein materials derived from oilseeds substitutable therefor are particularly preferable, and protein materials derived from beans, among the oilseeds, are further preferable.

A form of the protein is not limited, and examples thereof include a liquid form, a pulverized product, an extracted protein, a concentrated protein, and a separated protein.

### Microbial fermentation product containing δ-lactones and/or γ-lactones

The microbial fermentation product containing δ-lactones and/or γ-lactones of the present invention is obtained by culturing plant milk with microorganisms, and contains 1 ppm or more of the 6-lactones and/or the γ-lactones in the fermentation product. Examples of the plant milk include soymilk, almond milk, and coconut milk. In place of the plant milk, a composition containing a plant oil and fat, such as soymilk cream, may be used. Examples of the plant oil and fat include palm oil, coconut oil, palm kernel oil, soybean oil, rapeseed oil, sunflower seed oil, cottonseed oil, peanut oil, rice bran oil, corn oil, safflower oil, olive oil, kapok oil, moringa oil, sesame oil, and evening primrose oil. The plant milk preferably contains a nutrient source for the proliferation of microorganisms, such as a sugar, a peptide, or a yeast extract.

The microbial fermentation product containing δ-lactones and/or γ-lactones is blended so that the content of the 6-lactones and/or the γ-lactones in the textured protein material is 1 ppb or more on a weight basis. The content is preferably 5 ppb or more, more preferably 10 ppb or more, even more preferably 40 ppb or more, and still even more preferably 80 ppb or more. Further preferably, from 10 to 3000 ppb, from 40 to 3000 ppb, from 80 to 3000 ppb, from 10 to 2500 ppb, from 40 to 2500 ppb, or from 80 to 2500 ppb can also be selected.

The microbial fermentation product containing δ-lactones and/or γ-lactones preferably contains 6-lactones and γ-lactones.

### δ-Lactones and/or γ-lactones

Examples of the δ-lactones of the present invention include δ-octalactone, δ-nonalactone, 6-decalactone, δ-undecalactone, 6-dodecalactone, δ-tridecalactone, δ-tetradecalactone, and δ-hexadecalactone.

Examples of the γ-lactones of the present invention include γ-octalactone, γ-nonalactone, γ-decalactone, γ-undecalactone, and γ-dodecalactone.

The amount of the 6-lactones and/or the γ-lactones of the present invention refers to a total amount of the δ-lactones, a total amount of the γ-lactones, or a total amount of the δ-lactones and the γ-lactones.

The contents of the δ-lactones and the γ-lactones in the textured plant protein material are determined by quantitatively analyzing an oil and fat content extracted from the textured protein material using a chloroform/methanol solution by gas chromatography-mass spectrometry (GC-MS).

The gas chromatography-mass spectrometry (GC-MS) was performed under the following conditions.

### Analysis conditions for GC-MS

Column: DB-WAX (Agilent J&W, length: 60 m, internal diameter: 0.25 mm, film thickness: 0.25 µm)
Oven: 50°C (not retained) -3°C/min-250°C (retained for 80 min)
Carrier gas: He, G1 grade injection volume
Injection volume: 1 µl
Mass spectrometer ionization voltage: 70 eV
Ion source temperature: 230°C

Examples of the microorganism used in microbial fermentation include lactic acid bacteria and yeast.

The microbial fermentation product may be a product fermented with lactic acid bacteria or yeast alone, or a product fermented with lactic acid bacteria and yeast.

When a microbial fermentation product including a yeast-fermented product is used, a yeast smell has an effect on successfully masking a grain smell due to plant protein materials. It effectively contributes to offering good meat-like umami and juicy palate to the textured plant protein material.

On the other hand, a textured plant protein material which is not produced by yeast fermentation but is produced by using a lactone perfume has a strong grain smell derived from plant protein materials and cannot provide meat-like umami and a juicy palate.

### Lactic acid bacteria

In the present invention, lactic acid bacteria capable of hydrating unsaturated fatty acids and generating hydroxylated fatty acids are used. Specific examples of the lactic acid bacteria include Lactobacillus bacteria such as Lactobacillus brevis (L. brevis), Lactobacillus acidophilus (L. acidophilus), Lactobacillus casei (L. casei), Lactobacillus paracasei (L. paracasei), Lactobacillus gasseri (L. gasseri), Lactobacillus reuteri (L. reuteri), Lactobacillus delbruekii ssp. bulgaricus (L. delbruekii ssp. bulgaricus), Lactobacillus plantarum (L. plantarum), Lactobacillus buchneri (L. buchneri), Lactobacillus rhamnosus (L. rhamnosus), and Lactobacillus helveticus (L. helveticus); Pediococcus bacteria such as Pediococcus acidilactici (P. acidilactici) and Pediococcus pentosaceus (P. pentosaceus); Streptococcus bacteria such as Streptococcus thermophilus; Leuconostoc bacteria such as Leuconostoc mesenteroides; and Lactococcus bacteria such as Lactococcus lactis (Lc. lactis), Lactococcus lactis ssp. lactis (Lc. lactis ssp. lactis), Lactococcus lactis ssp. cremoris (Lc. lactis ssp. cremoris), and Lactococcus lactis subsp. lactis biovar diacetylactis.

### Yeast

In the present invention, yeasts such as Saccharomyces cerevisiae, Saccharomyces bayanus, Saccharomyces sake, Saccharomyces beticus, Schizosaccharomyces pombe, Kluyveromyces lactis, Kluyveromyces marxianus, Debaryomyces hansenii, and Yarrowia lipolytica can be used.

Typical and non-limiting production examples of microbial fermentation products containing lactones will be given below.

Plant milk is fermented with yeast. According to need, lactic acid bacteria are added to carry out fermentation. Lactic acid bacterium fermentation may be carried out simultaneously with yeast fermentation, or lactic acid fermentation may be carried out in advance and then yeast fermentation may be carried out. The fermentation method is not particularly limited, but aerobic fermentation is preferred when yeast is used. After completion of the fermentation, according to need, an acid such as hydrochloric acid, citric acid, or lactic acid is added to adjust the pH to 4.0 or less, and the mixture is heated to 60°C or higher to obtain a microbial fermentation product containing lactones.

According to need, the microbial fermentation product containing lactones may be subjected to concentration processing to increase the concentration of the lactones to a predetermined concentration.

In addition, a composition containing a plant oil and fat may be used instead of the plant milk.

### Method for producing textured plant protein material

The term "textured plant protein material" in the present invention includes a puffed type textured plant protein material and a non-puffed type textured plant protein material.

The puffed type textured plant protein material is obtained by introducing a protein raw material such as defatted soybean as a main production raw material (textured raw material) into an extruder together with water and other suitable raw materials such as starch and an oil and fat; kneading the raw materials with a screw in the extruder under a condition that an inside of the extruder is pressurized and heated; extruding the formed kneaded product through a hole of a portion called "die" at an outlet portion of the extruder under normal pressure; and optionally cutting and drying the extrudate.

When the kneaded product is extruded through the die under normal pressure, the puffed type textured plant protein material changes into an extrudate in a state where the texture is puffed. For example, a textured plant protein material produced using defatted soybean or powdery soybean protein as a main raw material is also called "granular soybean protein" or "soybean puff".

On the other hand, the non-puffed type textured plant protein material is obtained by introducing a protein raw material such as defatted soybean as a main production raw material (textured raw material) into an extruder together with water and other suitable raw materials such as starch and an oil and fat; kneading the raw materials with a screw in the extruder under a condition that an inside of the extruder is pressurized and heated; extruding the formed kneaded product from an outlet portion of the extruder after gradual cooling of a dough at a portion called "die", which is a cooling tube; and optionally cutting the extrudate, followed by refrigeration and freezing.

When the kneaded product is extruded through the die under normal pressure, the non-puffed type textured plant protein material is converted into a film or fiber shape without being puffed, and is changed into an extrudate having a structure and a texture similar to those of meats, scallop eyes, and the like. For example, a textured plant protein material produced using defatted soybean or powdery soybean protein as a main raw material is also referred to as "fibrous soybean protein".

### Extruder

In the production of the textured plant protein material of the present invention, texturing is performed using an extruder. In general, the extruder has a mechanism of feeding, kneading, pressurizing (compressing) and heating raw materials from a raw material supply port in a barrel by means of a screw disposed therein, and has a die with holes of various shapes attached to a tip portion (outlet) of the barrel.

The extruder that can be used is not limited, and a single-screw extruder, a double-screw extruder, or an extruder having three or more screws can be used. Among them, a twin-screw extruder can be suitably used.

### Operation conditions for extruder

Operation conditions employed when the raw materials for producing the textured plant protein material are supplied to the extruder and extruded through the die under pressure and heat can be appropriately selected and adjusted based on known conditions. As a non-limiting example, a temperature of the barrel tip portion as a heating condition is preferably from 100 to 220°C, and more preferably from 120 to 180°C.

As a pressurization condition, the die pressure at the tip of the barrel is preferably from 0.01 to 10 MPa, more preferably from 0.01 to 4 MPa.

### Die

As the die installed at the outlet of the extruder, a cooling die is used when the non-puffed type textured plant protein material is produced. The shape of the die is preferably circular or rectangular. Since an opening area correlates with a flow rate of the extruder, the opening area can be appropriately set to an optimum size in accordance with the operation conditions. For example, when mass production is desired, it is necessary to increase the opening area, and, when small production is desired, it is necessary to reduce a processing amount.

### Water addition

Water is added when the raw materials for the textured plant protein material are supplied to the extruder. In the case of the method for producing a textured plant protein material of the present invention, water is appropriately added so that a water content of the entire raw material supplied to the extruder is preferably from 20 to 90 wt.%, and more preferably from 25 to 75 wt.%.

### Oil and Fat

The textured plant protein material of the present invention may contain an oil and fat.

Examples of the oil and fat can include plant oils and fats such as palm oil, coconut oil, palm kernel oil, soybean oil, rapeseed oil, sunflower seed oil, cottonseed oil, peanut oil, rice bran oil, corn oil, safflower oil, olive oil, kapok oil, moringa oil, sesame oil, and evening primrose oil, and medium chain fatty acid triglycerides. The use of animal oils and fats such as milk fat, beef tallow, and lard is not hindered, and the above oils and fats can be used singly or as a mixed oil, or hydrogenated oils, fractionated oils, hydrogenated fractionated oils, and fractionated hydrogenated oils of the above oils and fats, as well as processed oils and fats obtained through transesterification thereof can be used.

A content of the oil and fat in the textured plant protein material is preferably from 0.5 to 7.5 wt.%, and more preferably from 0.5 to 7.0 wt.%, and further preferably can be from 0.5 to 6.5 or from 0.5 to 6.0 wt.%.

### Protein raw material

In the present invention, the term "protein raw material" refers to a textured raw material that is to be introduced into the extruder for producing the textured plant protein material and contains a protein. Specifically, in one aspect, a plant protein raw material is preferably used.

The "plant protein raw material" is a protein material derived from a plant, and examples thereof include protein materials derived from oilseeds such as soybean, pea, mung bean, chickpea, broad bean, rapeseed, cottonseed, peanut, sesame, safflower, sunflower, corn, safflower, and coconut; and protein materials derived from grain seeds such as rice, barley, and wheat. Examples of the protein material include pulverized products, extracted proteins, concentrated proteins, and separated proteins of the above-described plants. Examples of the protein material include rice glutelin, barley prolamin, wheat prolamin, wheat gluten, whole fat soybean powder, defatted soybean powder, concentrated soybean protein, separated soybean protein, separated pea protein, and separated mung bean protein. As plant protein raw materials, protein materials derived from soybean as described in the Examples and protein materials derived from oilseeds substitutable therefor are particularly preferable, and protein materials derived from beans, among the oilseeds, are further preferable.

The protein raw material used in the present invention is in a powder or granular form. That is, it can be in a powder form or a granular form. However, in the case of a granular form, a granular diameter thereof is preferably as small as possible. Preferably, the granular diameter size is preferably 2 mm or less, and more preferably 1 mm or less.

A content of the protein in a solid content of the protein raw material is preferably as high as possible in order to satisfy the protein content per solid content in the textured plant protein material. Specifically, the protein content is 15 wt.% or more, preferably 20 wt.% or more, and more preferably 30 wt.% or more, and further preferably can be 40 wt.% or more, 50 wt.%, 60 wt.% or more, 70 wt.% or more, or 75 wt.% or more in the solid content. Also, the protein content can be 95 wt.% or less, 92 wt.% or less, or 91 wt.% or less.

The protein content is a value measured as a percentage relative to a sample and expressed in terms of solid content, and the value is obtained by determining a total nitrogen amount in a sample by the Kjeldahl method and multiplying the total nitrogen amount by a coefficient of 6.25.

### Other textured raw material

As textured raw materials for the textured plant protein material of the present invention, various other auxiliary raw materials can be added. For example, oils and fats, alkali metal salts such as common salt, animal proteins such as egg white and casein, carbohydrates such as starch and polysaccharides, dietary fibers, emulsifiers, perfumes, and other known additives can also be added as appropriate to an extent that the effects of the present invention are not impaired. However, an animal protein is preferably not contained when it is desired to emphasize that the textured plant protein material is composed only of plant raw materials.

In general, a mixing ratio of the protein raw material in the raw materials for producing the textured plant protein material can be appropriately set depending on the desired quality in view of a balance with the other raw materials. Specifically, the protein raw material is blended so that the content of the protein in the entire raw material is from 15 to 95 wt.%. Preferably, the protein content can be 20 wt.% or more, or 22 wt.% or more. An upper limit of the protein content can be preferably 93 wt.% or less, 91 wt.%, or 90 wt.% or less.

### Intended use

The textured plant protein material obtained by the present invention is excellent in meat-like umami and juicy palate, and thus can be used as a meat substitute material, and can be used in products using animal meat or fish meat and plant-based meat substitute products.

For example, it can be used as a meat substitute material for processed foods such as hamburger steak, meatball, nugget, gyoza (chiaotzu), steamed meat bun, shu mai (steamed meat dumpling), minced meat cutlet, croquette, minced meat, and tsukune (grilled chicken meatball).

The textured plant protein material of the present invention can also be directly cooked and used as animal meat-like raw materials such as sliced meats like roasted pork fillet and nibbles.

The textured plant protein material of the present invention may be seasoned for use as a meat substitute material. Specifically, in addition to the protein raw material, starch, dietary fibers, and preferably oil and fat raw materials, a protein hydrolysate, a yeast extract, a perfume, a flavor oil, an umami seasoning, and the like are preferably combined and added as a raw material for texturing.

### Examples

Hereinafter, the present invention will be explained by describing examples. In the examples, all parts and percentages are on a weight basis unless otherwise specified.

### Production Example 1

### Preparation 1 of microbial fermentation product containing lactones

The lactic acid bacterium Lactobacillus brevis (L. brevis) and the yeast Saccharomyces cerevisiae were simultaneously added to soymilk cream (available from Fuji Oil Co., Ltd., solid content: 18.0%, protein: 5.6%, lipid: 12.3%), followed by aerobic fermentation at 28°C for 5 days. After completion of the fermentation, hydrochloric acid was added to adjust the pH to 3.0 or less, the mixture was heated at 80°C for 20 minutes, and a microbial fermentation product containing δ-lactones and γ-lactones was obtained.

### Production Example 2

### Removal of yeast smell by adsorption treatment

The microbial fermentation product containing δ-lactones and γ-lactones obtained in Production Example 1 was reacted with an anionic ion exchange resin, and then reacted with a synthetic adsorbent to remove the yeast smell. As a result of measuring a sample after the reaction by GC-MS, it was confirmed that aroma components such as butanoic acid, propionic acid, benzaldehyde, isovaleric acid, isobutyric acid, 2-pentanone, 2-heptanone, and phenethyl alcohol were reduced.

### Production Example 3

### Preparation of plant oil and fat containing lactones

Sixty (60) wt.% of the microbial fermentation product containing δ-lactones and γ-lactones obtained in Production Example 1 and 40 wt.% of soybean oil were mixed, an oil and fat fraction was collected by centrifugation, and a plant oil and fat containing δ-lactones and γ-lactones was obtained.

### Production Example 4

### Preparation 2 of microbial fermentation product containing lactones

The yeast Saccharomyces bayanus was added to soymilk cream (available from Fuji Oil Co., Ltd., solid content: 18.0%, protein: 5.6%, lipid: 12.3%), followed by aerobic fermentation at 28°C for 5 days. After completion of the fermentation, hydrochloric acid was added to adjust the pH to 3.0 or less, the mixture was heated at 80°C for 20 minutes, and a microbial fermentation product containing δ-lactones and γ-lactones was obtained.

### Production Example 5

### Preparation 3 of microbial fermentation product containing lactones

The yeast Saccharomyces cerevisiae was added to an emulsion prepared by mixing 12.3 wt.% of soybean oil, 6.2 wt.% of powdery soybean protein (available from Fuji Oil Co., Ltd.), and 0.5 wt.% of sucrose, followed by aerobic fermentation at 28°C for 5 days. After completion of the fermentation, hydrochloric acid was added to adjust the pH to 3.0 or less, the mixture was heated at 80°C for 20 minutes, and a a microbial fermentation product containing δ-lactones and γ-lactones was obtained.

### Comparative Production Examples 1 and 2

A synthetic lactone perfume having no yeast smell was diluted with soybean oil to prepare a comparative product. The results are summarized in Table 1 below.

**Table 1**

| | Production Example 1 | Production Example 2 | Production Example 3 | Production Example 4 | Production Example 5 | Comparative Production Example 1 | Comparative Production Example 2 |
|---|---|---|---|---|---|---|---|
| Remarks | Soymilk cream | Soymilk cream | Oil and fat extract of Production Example 1 | Soymilk cream | Plant oil and fat | Perfume | Perfume |
| | Yeast, lactic acid bacteria | Yeast, lactic acid bacteria | | Yeast | Yeast | (γ-Lactone) | (δ-Lactone) |
| | Before adsorption treatment | After adsorption treatment | | | | | |
| γ-Lactones (ppm) | 4.5 | 2.5 | 8 | 4 | 3.4 | 5 | 0 |
| δ-Lactones (ppm) | 0.3 | 0.2 | 0.5 | 0.4 | 0.2 | 0 | 5 |
| Yeast smell | Strong | Weak | Strong | Strong | Strong | None | None |

While the microbial fermentation products containing lactones were prepared, a yeast smell was perceived in Production Examples 1, 3, 4 and 5. This is because distillation is not performed as in Patent Document 3, and thus the yeast smell derived from yeast fermentation is present. In Production Examples 1, 3, 4 and 5, a peach-like fruit smell and the yeast smell coexisted, and the smell cannot be said to be a meat-like aroma at all. On the other hand, in Production Example 2, the yeast smell was weak, and the peach-like fruit smell peculiar to γ-lactones was more strongly perceived than in Production Examples 1, 3, 4 and 5. This was confirmed by comparison with the lactone perfumes of Comparative Production Examples 1 and 2.

Next, raw materials containing the microbial fermentation products containing lactones prepared in Production Examples 1 to 5 were subjected to an extruder to produce textured plant protein materials.

As the textured plant protein materials, puffed type textured plant protein materials and non-puffed type textured plant protein materials were produced.

### Production of puffed type textured plant protein material (Examples 1 to 5 and Comparative Examples 1 and 2)

According to the formulations listed in Table 2, a kneaded product of raw materials was extruded through a die at the tip of a barrel, and the extrudate was cut with a cutter immediately after an outlet from the die to attain a length of from about 3 to 5 mm, then dried with hot air in a dryer to attain a water content of 8 wt.%, and textured plant protein materials of the present invention were obtained.

As the microbial fermentation products containing lactones, a concentrated fermented liquid obtained by concentrating the microbial fermentation product containing lactones of Production Example 1 to adjust the γ-lactone concentration to 112 ppm and the δ-lactone concentration to 7 ppm (lactone-containing microbial fermentation product A), a fermented liquid obtained by further adjusting the concentrated fermented liquid to attain a γ-lactone concentration of 30 ppm (lactone-containing microbial fermentation product B) or 60 ppm (lactone-containing microbial fermentation product C), were used as raw materials.

"γ-Lactone perfume a" was obtained by concentrating the perfume of Comparative Production Example 1 to adjust the γ-lactone concentration to 30 ppm, and "δ-lactone perfume a" was obtained by concentrating the perfume of Comparative Production Example 2 to adjust the δ-lactone concentration to 30 ppm.

A twin-screw extruder (available from Kowa Kogyo Co., Ltd.) was used as the extruder, and extrusion was performed under the following conditions.
- Die: circular opening (2.5 mm in diameter × 10 holes)
- Powder raw material flow rate: 25 kg/hour
- Amount of water added: 12 kg/hour
- Screw rotation speed: 200 rpm
- Barrel temperature: inlet side: 80°C, central portion: 120°C, outlet side: 150°C
- Die pressure at tip of barrel: controlled within a range of from 0.01 to 1 MPa

The separated soybean protein (protein content: 90% in terms of solid content) used as the raw material was produced by the method which will be described in Production Example 6. The protein content of the defatted soybean used as the raw material was 52% in terms of solid content.

### Production Example 6

Water was added to the defatted soybean in an amount of 7 times the amount of the defatted soybean, and the pH was adjusted to 7 with sodium hydroxide. The mixture was mixed and extracted, and centrifuged to remove precipitates. Then, water was further added to the residue in an amount of 5 times the amount of the defatted soybean, the mixture was treated in the same manner, and an extracted liquid was obtained. The pH was adjusted to 4.5 with hydrochloric acid to precipitate a protein, which was collected by centrifugation. After addition of water, the mixture was neutralized with sodium hydroxide and spray-dried at a hot air temperature of 180°C and an exhaust air temperature of 70°C, and a powdery separated soybean protein was obtained. The protein content of the separated soybean protein was 90% in terms of solid content.

For each of the obtained samples, seven panelists who were skilled in sensory evaluation of the textured plant protein material flavor were asked to try the samples. For the meat-like umami, juicy palate, and grain smell, sensory evaluation was performed using the following evaluation criteria. The evaluation was determined through panelists' joint consultation. The samples evaluated as good (∘) or excellent (⊚) were regarded as acceptable. The results are shown in Table 2.

### <Evaluation Criteria>

- Evaluation of meat-like umami
   Excellent (⊚): Meat-like umami is strongly perceived.
   Good (∘): Meat-like umami is perceived.
   Poor (×): No meat-like umami is perceived.
- Evaluation of juicy palate
   Excellent (⊚): Juicy palate is strongly perceived.
   Good (∘): Juicy palate is perceived.
   Poor (×): No juicy palate is perceived.
- Evaluation of grain smell
   Excellent (⊚): Grain smell is not perceived at all.
   Good (∘): Grain smell is hardly perceived, but slightly perceived as compared with excellent (⊚).
   Poor (×): Grain smell is most strongly perceived.

**Table 2**

| | Example 1 | Example 2 | Example 3 | Example 4 | Example 5 | Comparative Example 1 | Comparative Example 2 |
|---|---|---|---|---|---|---|---|
| Defatted soybean (%) | 79.5 | - | 99.5 | 99.5 | 99.5 | 99.5 | 99.5 |
| Dietary fiber (%) | 20 | - | - | - | - | - | - |
| Powdery separated soybean protein (%) of Production Example 6 | - | 99.5 | - | - | - | - | - |
| Lactone-containing microbial fermentation product B (%) | 0.5 | 0.5 | 0.5 | - | - | - | - |
| Lactone-containing microbial fermentation product C (%) | - | - | - | 0.5 | - | - | - |
| Lactone-containing microbial fermentation product A (%) | - | - | - | - | 0.5 | - | - |
| γ-Lactone perfume a (%) | - | - | - | - | - | 0.5 | - |
| δ-Lactone perfume a (%) | - | - | - | - | - | - | 0.5 |
| Protein content (%) of textured plant protein material | 41.1 | 87.6 | 51.7 | 51.7 | 51.7 | 51.7 | 51.7 |
| Content (ppb) of γ-lactones in textured plant protein material | 148.8 | 146.8 | 149.9 | 299.9 | 559.8 | 149.9 | 0 |
| Content (ppb) of δ-lactones in textured plant protein material | 9.3 | 9.2 | 9.4 | 18.7 | 35.0 | 0 | 149.9 |
| Meat-like umami | ○ | ○ | ○ | ⊚ | ⊚ | × | × |
| Juicy palate | ○ | ○ | ○ | ⊚ | ⊚ | × | × |
| Grain smell | ○ | ○ | ○ | ⊚ | ⊚ | × | × |

In Comparative Examples 1 and 2 in which a perfume having no yeast smell was used, neither meat-like umami nor a juicy palate was perceived. This seems to be because the grain smell is strong, and thus the meat-like juicy palate is not perceived.

On the other hand, the textured plant protein materials (Examples 1 to 5) using the lactone-containing microbial fermentation products A to C having a strong yeast smell uniformly provided meat-like umami and a juicy palate. This was considered to be because the yeast smell might successfully mask the grain smell and influence impartation of umami and a juicy palate. Example 5 in which the amount of lactones (the total amount of γ-lactones and δ-lactones) was 594.8 ppb provided considerable meat-like umami and juicy palate. From the tendencies that the amount of lactones (the total amount of γ-lactones and δ-lactones) is 159.3 ppb in Example 3 and the amount of lactones (the total amount of γ-lactones and δ-lactones) is 318.6 ppb in Example 4, it is obvious that the same effect can be obtained also in a case of larger amounts of lactones blended.

In addition, when the separated soybean protein was used as in Example 2, the grain smell was further reduced. In Examples 1 to 3, the protein content was from 40 to 90%, and it was found that meat-like umami and a juicy palate were imparted by blending a microbial fermentation product containing lactones in an amount within this range.

### Production of non-puffed type textured plant protein material

### (Examples 6 to 15 and Comparative Examples 3 to 5)

According to the formulations listed in Table 3, a microbial fermentation product or lactone perfume, a protein raw material, and a raw material containing water, an oil and fat, starch, and a perfume were introduced into the extruder, kneaded, pressurized and heated, the raw materials were extruded under normal pressure through the cooling die installed at the outlet of the extruder for texturing, and each textured plant protein material was obtained.

The microbial fermentation products or lactone perfumes used as the raw materials are as follows.

"Lactone-containing microbial fermentation product a", "lactone-containing microbial fermentation product b", "plant oil and fat c derived from lactone-containing microbial fermentation product", "lactone-containing microbial fermentation product d", and "lactone-containing microbial fermentation product e" were obtained by concentrating the lactone-containing microbial fermentation products of Production Examples 1, 2, 3, 4, and 5, respectively, and adjusting the γ-lactone concentration to a concentration of 43 ppm. The "lactone-containing fermentation product a", "plant oil and fat c derived from lactone-containing microbial fermentation product", "lactone-containing fermentation product d" and "lactone-containing fermentation product e" had a strong yeast smell, and the "lactone-containing fermentation product b" had a weak yeast smell.

"Lactone-containing microbial fermentation product D" was prepared in the same manner as in Production Example 1, and had a γ-lactone concentration adjusted to 20 ppm. "Lactone-containing microbial fermentation product E" was prepared in the same manner as in Production Example 1, and had a δ-lactone concentration adjusted to 20 ppm.

The γ-lactone perfume b was obtained by concentrating the perfume of Comparative Production Example 1 to adjust the concentration thereof to 100 ppm, and the δ-lactone perfume b was obtained by concentrating the perfume of Comparative Production Example 2 to adjust the concentration thereof to 100 ppm.

A twin-screw extruder was used, and operated while the temperature was controlled within a range of from 80°C to 100°C at the inlet side, within a range of from 140°C to 180°C at the outlet side, and the die pressure at the tip of the barrel was controlled within a range of from 0.01 to 1 MPa. Water was added to attain a water content of the entire raw material of from 50 to 70%. The extruder twin-screw extruder (available from Kowa Kogyo Co., Ltd.) was used under the following conditions. The cooling die used had a rectangular hole shape of 10 mm × 40 mm and a length of 90 cm.

Each of the obtained samples was subjected to sensory evaluation of the textured plant protein material flavor in the same manner as in Example 1. The results are listed in Tables 3 to 5.

**Table 3**

| | Comparative Example 3 | Example 6 | Examples 7 | Examples 8 | Examples 9 |
|---|---|---|---|---|---|
| Powdery separated soybean protein (%) of Production Example 6 | 27.69 | 27.69 | 27.69 | 27.69 | 27.69 |
| Dietary fiber (%) | 2.93 | 2.93 | 2.93 | 2.93 | 2.93 |
| Corn starch (%) | 1.3 | 1.3 | 1.3 | 1.3 | 1.3 |
| Salt (%) | 0.33 | 0.33 | 0.33 | 0.33 | 0.33 |
| Edible plant oil and fat (%) | 4.56 | 4.33 | 4.33 | 4.33 | 4.33 |
| Lactone-containing microbial fermentation product a (%) | - | 0.23 | - | - | - |
| Lactone-containing microbial fermentation product b (%) | - | - | 0.23 | - | - |
| Plant oil and fat c (%) derived from lactone-containing microbial fermentation product | - | - | - | 0.23 | - |
| Lactone-containing microbial fermentation product d (%) | - | - | - | - | 0.23 |
| Water (%) | 63.19 | 63.19 | 63.19 | 63.19 | 63.19 |
| Protein content (%) of textured plant protein material | 24.9 | 24.9 | 24.9 | 24.9 | 24.9 |
| Amount (ppb) of γ-lactones in textured plant protein material | 0 | 98.9 | 98.9 | 98.9 | 98.9 |
| Amount (ppb) of δ-lactones in textured plant protein material | 0 | 6.6 | 7.9 | 6.2 | 9.9 |
| Meat-like umami | × | ⊚ | ○ | ⊚ | ⊚ |
| Juicy palate | × | ⊚ | ○ | ⊚ | ⊚ |
| Grain smell | × | ⊚ | ○ | ⊚ | ⊚ |

**Table 4**

| | Example 10 | Example 11 | Example 12 | Example 13 |
|---|---|---|---|---|
| Powdery separated soybean protein (%) of Production Example 6 | 27.69 | 27.69 | 27.69 | 27.69 |
| Dietary fiber (%) | 2.93 | 2.93 | 2.93 | 2.93 |
| Corn starch (%) | 1.3 | 1.3 | 1.3 | 1.3 |
| Salt (%) | 0.33 | 0.33 | 0.33 | 0.33 |
| Edible plant oil and fat (%) | 4.33 | 4.39 | 4.53 | - |
| Lactone-containing microbial fermentation product e (%) | 0.23 | - | - | - |
| Lactone-containing microbial fermentation product a (%) | - | 0.17 | 0.03 | 4.56 |
| Water (%) | 63.19 | 63.19 | 63.19 | 63.19 |
| Protein content (%) of textured plant protein material | 24.9 | 24.9 | 24.9 | 24.9 |
| Amount (ppb) of γ-lactones in textured plant protein material | 98.9 | 73.1 | 12.9 | 1960.6 |
| Amount (ppb) of δ-lactones in textured plant protein material | 5.8 | 4.9 | 0.9 | 130.7 |
| Meat-like umami | ⊚ | ○ | ○ | ⊚ |
| Juicy palate | ⊚ | ○ | ○ | ⊚ |
| Grain smell | ⊚ | ○ | ○ | ⊚ |

**Table 5**

| | Example 14 | Example 15 | Comparative Example 4 | Comparative Example 5 |
|---|---|---|---|---|
| Powdery separated soybean protein (%) of Production Example 6 | 28.53 | 28.53 | 27.69 | 27.69 |
| Dietary fiber (%) | 1.72 | 1.72 | 2.93 | 2.93 |
| Corn starch (%) | 0.69 | 0.69 | 1.3 | 1.3 |
| Salt (%) | - | - | 0.33 | 0.33 |
| Edible plant oil and fat (%) | 4.01 | 4.01 | 4.46 | 4.46 |
| Lactone-containing microbial fermentation product D (%) | 0.31 | - | - | - |
| Lactone-containing microbial fermentation product E (%) | - | 0.31 | - | - |
| γ-Lactone perfume b (%) | - | - | 0.1 | - |
| δ-Lactone perfume b (%) | - | - | - | 0.1 |
| Water (%) | 64.75 | 64.75 | 63.19 | 63.19 |
| Protein content (%) of textured plant protein material | 26.8 | 26.8 | 24.9 | 24.9 |
| Amount (ppb) of γ-lactones | 64.7 | 0 | 100.0 | 0 |
| Amount (ppb) of δ-lactones | 0 | 64.7 | 0 | 100.0 |
| Meat-like umami | ○ | ○ | × | × |
| Juicy palate | ○ | ○ | × | × |
| Grain smell | ○ | ○ | × | × |

In Comparative Examples 4 and 5 in which a perfume having no yeast smell was used, neither meat-like umami nor a juicy palate was perceived. This seems to be because the grain smell is strong, and thus the meat-like juicy palate is not perceived.

On the other hand, Example 7 in which the lactone-containing microbial fermentation product b having a yeast smell weakened by the adsorption treatment was used provided rather weak meat-like umami and juicy palate, as compared with those in which another lactone-containing microbial fermentation product having a strong yeast smell was used.

The textured protein materials (Examples 6, 8, 9, and 10) using the lactone-containing microbial fermentation products a, d, and e and the plant oil and fat c derived from lactone-containing microbial fermentation product uniformly provided meat-like umami and a juicy palate. This is considered to be because the yeast smell may successfully mask the grain smell and influence impartation of umami and a juicy palate.

From these results, it was found that meat-like umami and a juicy palate are imparted also to the non-puffed type textured plant protein materials by the lactone-containing microbial fermentation product having the yeast smell as it is.

Given the above, it has been found that, when a lactone-containing microbial fermentation product having a yeast smell is used, meat-like umami and a juicy palate can be perceived even when γ-lactones are contained in a large amount, and that the yeast smell created by fermentation is essential for masking the grain smell and increasing the meat-like umami and juicy palate given by lactones.

It has also been found that a yeast smell is created regardless of whether the fermentation product is a product obtained by fermenting soymilk cream or an oil and fat, or a product obtained by fermentation with lactic acid bacteria and yeast, or yeast alone, and that the yeast smell contributes to masking of the grain smell and increasing the meat-like umami and juicy palate given by lactones.

### (Example 16 and Comparative Example 6)

Next, in order to further verify the effect of the microbial fermentation product containing lactones, the application of the textured plant protein material was verified. A beef flavored plant seasoning was used to prepare a seasoned meat substitute material.

From the above studies, it has been found that the textured plant protein material of the present invention has meat-like umami and a juicy palate and can be used as a meat substitute. In this study, a beef flavored plant seasoning was used as the raw material for texturing, and the prepared material was evaluated as a seasoned meat substitute material.

According to the formulations listed in Table 6, a protein raw material and a raw material containing water, an oil and fat, and a perfume were introduced into the extruder, kneaded, pressurized and heated, the raw materials were extruded under normal pressure through the cooling die installed at the outlet of the extruder for texturing, and a textured product was obtained. A twin-screw extruder was used, and operated while the temperature was controlled within a range of from 80°C to 100°C at the inlet side, within a range of from 140°C to 180°C at the outlet side, and the die pressure at the tip of the barrel was controlled within a range of from 0.01 to 1 MPa. Water was added to attain a water content of the entire raw material of from 50 to 70%. The extruder twin-screw extruder (available from Kowa Kogyo Co., Ltd.) was used under the following conditions. The cooling die used had a rectangular hole shape of 10 mm × 40 mm and a length of 90 cm. A lactone-containing microbial fermentation product having a yeast smell was prepared according to the production method of Production Example 1 and concentrated, and "lactone-containing microbial fermentation product F" was obtained. As a result of analysis, the lactone-containing microbial fermentation product F contained 63 ppm of γ-lactones and 19 ppm of δ-lactones.

For each of the obtained samples, seven panelists who were skilled in sensory evaluation of the textured plant protein material flavor were asked to try the samples. For the meat-like umami and juicy palate, sensory evaluation was performed using the following evaluation criteria. The evaluation was determined based on an average of panelists' evaluations. A score of 3.0 or more was determined to be acceptable. The results are listed in Table 6.

### <Evaluation Criteria>

### Evaluation of seasoned meat substitute material

- Evaluation of meat-like umami
   4: Meat-like umami is strongly perceived.
   3: Meat-like umami is perceived.
   2: Meat-like umami is slightly perceived.
   1: No meat-like umami is perceived.
- Evaluation of juicy palate
   4: Juicy palate is strongly perceived.
   3: Juicy palate is perceived.
   2: Juicy palate is slightly perceived.
   1: No juicy palate is perceived.

**Table 6**

| | Comparative Example 6 | Example 16 |
|---|---|---|
| Powdery separated soybean protein (%) of Production Example 6 | 30.34 | 30.34 |
| Dietary fiber (%) | 0.76 | 0.76 |
| Edible plant oil and fat (%) | 3.03 | 2.97 |
| Lactone-containing microbial fermentation product F (%) | 0 | 0.06 |
| Spice (%) | 0.55 | 0.55 |
| Beef flavored seasoning (%) | 5.69 | 5.69 |
| Water (%) | 59.63 | 59.63 |
| Protein content (%) of textured plant protein material | 27.9 | 27.9 |
| Amount (ppb) of γ-lactones | 0 | 34.4 |
| Amount (ppb) of δ-lactones | 0 | 10.4 |
| Meat-like umami | 2 | 3 |
| Juicy palate | 1.4 | 3.2 |

From the average values, it was found that, due to the plant-based beef seasoning, the meat-like umami was slightly perceived, but the juicy palate was not so much perceived, also in Comparative Example 6. On the other hand, according to the results of Example 16 in which the microbial fermentation product containing lactones was added, the meat-like umami and juicy palate were perceived, and the improvement in taste of the meat substitute material by the microbial fermentation product containing lactones was confirmed.

From the results of the application studies given above, it has been confirmed that the yeast smell, which is created by fermentation, of the microbial fermentation product containing lactones not only contributes to increases in meat-like umami and juicy palate given by lactones but also contributes to an improvement in taste of the textured plant protein material using a seasoning or the like, while masking the grain smell.

## Claims

1. A textured plant protein material comprising from 15 to 95 wt.% of a protein, wherein the textured plant protein material further comprises a microbial fermentation product containing δ-lactones and/or γ-lactones, and has a content of the 6-lactones and/or the γ-lactones of 1 ppb or more on a weight basis.

2. The textured plant protein material according to claim 1, wherein the content of the δ-lactones and/or the γ-lactones is 5 ppb or more on a weight basis.

3. The textured plant protein material according to claim 1, wherein the content of the δ-lactones and/or the γ-lactones is 10 ppb or more on a weight basis.

4. The textured plant protein material according to claim 1, wherein the textured plant protein material is a microbial fermentation product by lactic acid bacteria and/or yeast.

5. The textured plant protein material according to claim 2, wherein the textured plant protein material is a microbial fermentation product by lactic acid bacteria and/or yeast.

6. The textured plant protein material according to claim 3, wherein the textured plant protein material is a microbial fermentation product by lactic acid bacteria and/or yeast.

7. A meat substitute material comprising the textured plant protein material described in claim 1.

8. A meat substitute material comprising the textured plant protein material described in claim 3.

9. A meat substitute material comprising the textured plant protein material described in claim 4.

10. A meat substitute material comprising the textured plant protein material described in claim 6.

11. A method for producing a textured plant protein material having a content of δ-lactones and/or γ-lactones of 1 ppb or more on a weight basis and comprising from 15 to 95 wt.% of a protein, the method comprising: introducing a protein raw material and a raw material including a microbial fermentation product containing the δ-lactones and/or the γ-lactones into an extruder; kneading, pressurizing and heating the raw materials; and extruding the raw materials through a die installed at an outlet of the extruder under normal pressure for texturing.

12. The method for producing a textured plant protein material according to claim 11, wherein the content of the δ-lactones and/or the γ-lactones is 5 ppb or more on a weight basis.

13. The method for producing a textured plant protein material according to claim 11, wherein the content of the δ-lactones and/or the γ-lactones is 10 ppb or more on a weight basis.

14. The method for producing a textured plant protein material according to claim 11, wherein the textured plant protein material is a microbial fermentation product by lactic acid bacteria and/or yeast.

15. The method for producing a textured plant protein material according to claim 13, wherein the textured plant protein material is a microbial fermentation product by lactic acid bacteria and/or yeast.
